# EUROPEAN PATENT APPLICATION

(11) **EP 4 685 294 A1**
(43) Date of publication of application: **28.01.2026**
(21) Application number: 23930955.2
(22) Date of filing: 25.12.2023
(51) Int. Cl.: E02F 3/43, G01C 9/00, G01C 15/00

(54) **WORK MACHINERY AND OPERATION ASSISTANCE SYSTEM FOR WORK MACHINERY**

(30) Priority: 28.03.2023 JP 2023051389
(71) Applicant: Hitachi Construction Machinery Co., Ltd., Tokyo 110-0015 (JP)
(72) Inventor: NAKAGI, Kenta, Tsuchiura-shi, Ibaraki 300-0013 (JP); IZUMI, Shiho, Tsuchiura-shi, Ibaraki 300-0013 (JP); TANAKA, Hiroaki, Tsuchiura-shi, Ibaraki 300-0013 (JP); HAYAKAWA, Naoki, Tsuchiura-shi, Ibaraki 300-0013 (JP)
(74) Representative: Manitz Finsterwald Patent- und Rechtsanwaltspartnerschaft mbB
(86) International application number: PCT/JP2023/046508
(87) International publication number: WO 2024/202339

(57) **Abstract**

Provided is a work machine including: a machine body that has an operation room; a front work device that is attached to the machine body; a monitor that is provided in the operation room; and a controller that causes the monitor to display operation support information including information on a position of a predetermined portion of the front work device, in which the controller receives, from an external measurement device installed around the machine body, information on coordinates of two or more specific points for each movable member configuring the front work device measured by the external measurement device, computes a first position as the position of the predetermined portion on the basis of the coordinates of the specific points received from the external measurement device, and causes the monitor to display first operation support information including information on the first position, as the operation support information. Accordingly, it is possible to support an operator's operation of a work machine even if the work machine is not provided with an onboard sensor with the attachment angle calibrated.

## Description

### Technical Field

The present invention relates to a work machine such as a hydraulic excavator and an operation support system for supporting an operation of the work machine.

### Background Art

A work machine such as a hydraulic excavator is mounted with an operation support system for supporting an operator's operation, such as machine guidance (hereinafter, abbreviated as MG) in some cases. The operation support system executes operation support using, as basic data, the angles of movable members such as a boom, an arm, and a bucket link, which angles are each sensed by an onboard sensor such as an IMU mounted in, for example, a hydraulic excavator. Where an operation support system is retrofitted to a work machine having no onboard sensors, it is necessary to attach, for example, an IMU as an onboard sensor to a movable member and calibrate the attachment angle of the onboard sensor with respect to the movable member.

Patent Document 1 discloses an example in which the angle of a movable member of a hydraulic excavator is computed on the basis of coordinates of a plurality of points on the movable member measured by a total station, and the computed angle is compared with the output angle of an IMU to compute the attachment angle of the IMU. In addition, Patent Document 2 discloses a technique in which a plurality of markers installed in a movable member of a hydraulic excavator are photographed by a camera, and the attachment angle of an IMU with respect to the movable member is obtained on the basis of the angle of the movable member computed on the basis of the camera image and the output angle of the IMU.

### Prior Art Document

### Patent Documents

Patent Document 1: Patent No. 6905137
Patent Document 2: U.S. Patent No. 10943360

### Summary of the Invention

### Problem to be Solved by the Invention

In the case of the technique described in Patent Document 1, since a plurality of points cannot be simultaneously measured by the total station, all the points to be measured in the movable member must be measured in order. Therefore, in a situation where an operation support system is retrofitted to the hydraulic excavator at the work site, the hydraulic excavator cannot be used for work during the calibration of the attachment angle of the IMU and the subsequent confirmation of the accuracy of a bucket claw tip position. A series of work such as the measurement of the coordinates of the movable member, the calibration of the attachment angle of the IMU, and the confirmation of the accuracy of a bucket claw tip position may require several hours or more, and there is a risk that the productivity at the work site is lowered.

On the other hand, in the technique of Patent Document 2, the coordinates of a plurality of points on the movable member can be simultaneously measured by the camera, so that the coordinate measurement time for the movable member can be shortened as compared with the technique of Patent Document 1. However, it takes time until the calibration work of the attachment angle of the IMU and the confirmation of the accuracy of a bucket claw tip position are completed, the attachment angles of all the IMUs are known, and the operation support system such as MG can be used.

An object of the present invention is to provide a work machine and an operation support system for a work machine capable of supporting an operator's operation of the work machine even if the work machine is not provided with an onboard sensor with the attachment angle calibrated.

### Means for Solving the Problem

In order to achieve the above object, the present invention provides a work machine including: a machine body that has an operation room; a front work device that is attached to the machine body; a monitor that is provided in the operation room; and a controller that causes the monitor to display operation support information including information on a position of a predetermined portion of the front work device, in which the controller receives, from an external measurement device installed around the machine body, information on coordinates of two or more specific points for each movable member configuring the front work device measured by the external measurement device, is configured to compute a first position as the position of the predetermined portion on the basis of the coordinates of the specific points, the coordinates being received from the external measurement device, and causes the monitor to display first operation support information including information on the first position, as the operation support information.

### Advantages of the Invention

According to the present invention, it is possible to support an operator's operation of a work machine even if the work machine is not provided with an onboard sensor with the attachment angle calibrated.

### Brief Description of the Drawings

[FIG. 1] FIG. 1 is a side view of a hydraulic excavator as an example of a work machine to which an operation support system according to an embodiment of the present invention is applied.
[FIG. 2] FIG. 2 is a plan view of the hydraulic excavator depicted in FIG. 1.
[FIG. 3] FIG. 3 is a diagram for depicting the inside of a cabin of the hydraulic excavator depicted in FIG. 1 as viewed forward from the driver seat.
[FIG. 4] FIG. 4 is a schematic diagram of the operation support system according to an embodiment of the present invention.
[FIG. 5] FIG. 5 is a diagram for depicting an example of a display screen displayed on an onboard monitor provided in the hydraulic excavator depicted in FIG. 1.
[FIG. 6] FIG. 6 is a flowchart for depicting a procedure of operation support by the operation support system according to an embodiment of the present invention.
[FIG. 7] FIG. 7 is a flowchart for depicting a procedure of operation support by the operation support system according to an embodiment of the present invention.

### Modes for Carrying Out the Invention

An embodiment of the present invention will be described below by using the drawings.

### -Work machine-

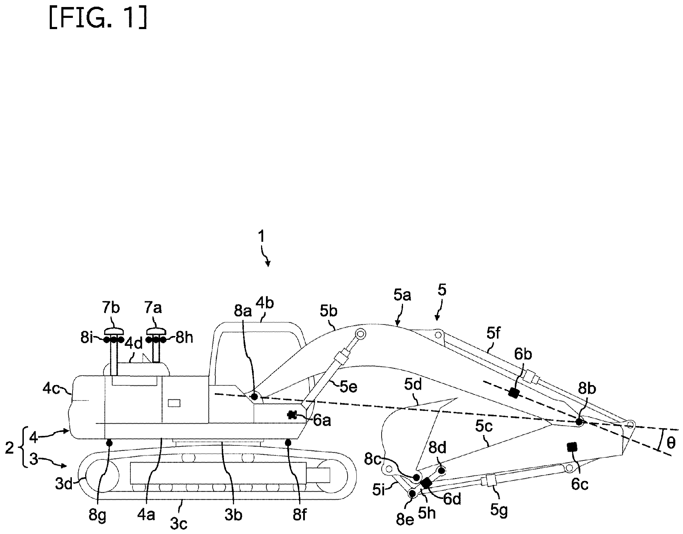

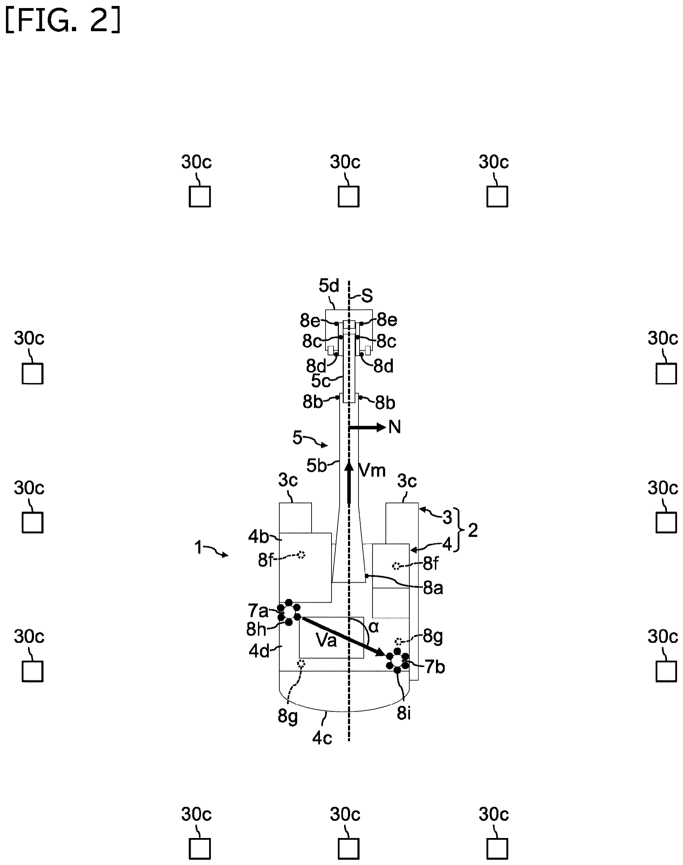

FIG. 1 is a side view of a hydraulic excavator 1 as an example of a work machine to which an operation support system according to an embodiment of the present invention is applied, and FIG. 2 is a plan view thereof. In FIG. 2, infrared cameras 30c to be described later are illustrated in addition to a hydraulic excavator 1. Hereinafter, it is assumed that the direction (the right side in FIG. 1) in which an operator seated on a driver seat faces is the front side of the hydraulic excavator 1 (strictly, a swing structure 4). It should be noted that although the invention can be applied to other construction machines such as bulldozers, FIG. 1 illustrates the hydraulic excavator 1 as a representative example of a work machine to which the invention is applied.

The hydraulic excavator 1 depicted in FIG. 1 is provided with a machine body 2, a front work device 5, an onboard monitor 10f, an onboard controller 10g, and the like. The machine body 2 includes a track structure 3 and a swing structure 4.

### -Track structure-

The track structure 3 is a basic structure that enables self-travelling of the hydraulic excavator 1, and may be a wheel-type track structure, but a configuration in which a crawler-type track structure is employed is exemplified in the present embodiment. The track structure 3 includes a track frame 3a, a swing bearing 3b, a crawler belt 3c, and a travel motor 3d. The track frame 3a is a base (skeleton) of the track structure 3, and is formed in an H-shape in plan view by a center frame and left and right side frames coupled to the center frame. The swing bearing 3b is installed above the center frame of the track frame 3a. An idler is rotatably supported at one end side in the longitudinal direction of each of the left and right side frames of the track frame 3a, and a sprocket is rotatably supported at the other end side. The output shaft of the travel motor 3d is coupled to the rotation shaft of the sprocket. The travel motor 3d is a hydraulic motor. The annular crawler belt 3c is looped between the idler and the sprocket, and the track structure 3 travels by the crawler belt 3c being driven by the sprocket. A plurality of rolling wheels 9 for supporting the inner peripheral part of the crawler belt 3c are rotatably supported at upper and lower parts of the side frames.

### -Swing structure-

The swing structure 4 is provided above the track structure 3 so as to be swingable to the left and right, and is provided with a swing frame 4a, a cabin (operation room) 4b, a counterweight 4c, an engine room (machine chamber) 4d, and the like. The swing frame 4a is a base frame of the swing structure 4, and is provided above the center frame of the track frame 3a via the swing bearing 3b. In the swing frame 4a, a swing motor (not illustrated) is mounted near the swing bearing 3b, and the output shaft of the swing motor meshes with a gear provided in the swing bearing 3b, so that the swing structure 4 swings to the left and right with respect to the track structure 3. An electrically driven motor or a hydraulic motor can be used for the swing motor.

The cabin 4b is installed at a front part of the swing frame 4a so as to be positioned on one side (the left side in the example) in the left and right directions of the front work device 5. An engine room 4d is installed behind the cabin 4b in the swing frame 4a. The engine room 4d houses a prime mover, a hydraulic pump driven by the prime mover, hydraulic equipment such as a control valve for controlling hydraulic fluid supplied from the hydraulic pump to hydraulic actuators (such as a boom cylinder 5e and the like), heat exchangers, tanks, various kinds of piping and wiring, and the like. Although an electrically driven motor may be used for the prime mover, an engine (internal combustion engine) is used in this example. The counterweight 4c is attached to the rear end of the swing frame 4a. The counterweight 4c is a heavy object for balancing the weight with the front work device 5, and is formed in an arc shape along the swing trajectory of the rear end of the swing frame 4a.

### -Front work device-

The front work device 5 is attached to the swing structure 4 and is an articulated work device including a work arm 5a, a bucket 5d that is an attachment, a boom cylinder 5e, an arm cylinder 5f, and a bucket cylinder 5g that are actuators.

The work arm 5a includes a boom 5b and an arm 5c. The boom 5b is coupled to a front part of the swing structure 4 so as to be pivotable in the vertical direction. The arm 5c is coupled to the tip end of the boom 5b so as to be pivotable in the front and rear directions. The bucket 5d is pivotally mounted to the tip end of the arm 5c. Both ends of the boom cylinder 5e are coupled to the swing structure 4 and the boom 5b. Both ends of the arm cylinder 5f are coupled to the boom 5b and the arm 5c. The proximal end of the bucket cylinder 5g is pivotally coupled to the arm 5c. The tip end of the bucket cylinder 5g is coupled to the tip end part of the arm 5c via a bucket link 5h, and is coupled to the bucket 5d via a bucket link 5i. All of the boom cylinder 5e, the arm cylinder 5f, and the bucket cylinder 5g are hydraulic cylinders.

### -Onboard sensor-

The hydraulic excavator 1 is provided with a plurality of onboard sensors 6a to 6d (angle sensors) for sensing the angles of corresponding movable members. The onboard sensors 6a to 6d are IMUs (inertial measurement unit) in the present embodiment, are installed in a plurality of movable members configuring the machine body 2 and the front work device 5, and output the postures of the corresponding movable members, that is, the ground angles (angles to the horizontal plane) in the present embodiment. Specific examples of the movable members where the onboard sensors 6a to 6d are installed are the swing frame 4a, the boom 5b, the arm 5c, and the bucket link 5h. The onboard sensor 6a is installed in the swing frame 4a, the onboard sensor 6b is installed in the boom 5b, the onboard sensor 6c is installed in the arm 5c, and the onboard sensor 6d is installed in the bucket link 5h.

It should be noted that a case where IMUs are used as the onboard sensors 6a to 6d will be described as an example in the present embodiment, but goniometers can also be used as the onboard sensors 6a to 6d. For example, it is conceivable that goniometers that sense a relative angle between the swing frame 4a and the boom 5b, a relative angle between the boom 5b and the arm 5c, and a relative angle between the arm 5c and the bucket 5d or the bucket link 5h are employed as the onboard sensors.

### -GNSS mobile station-

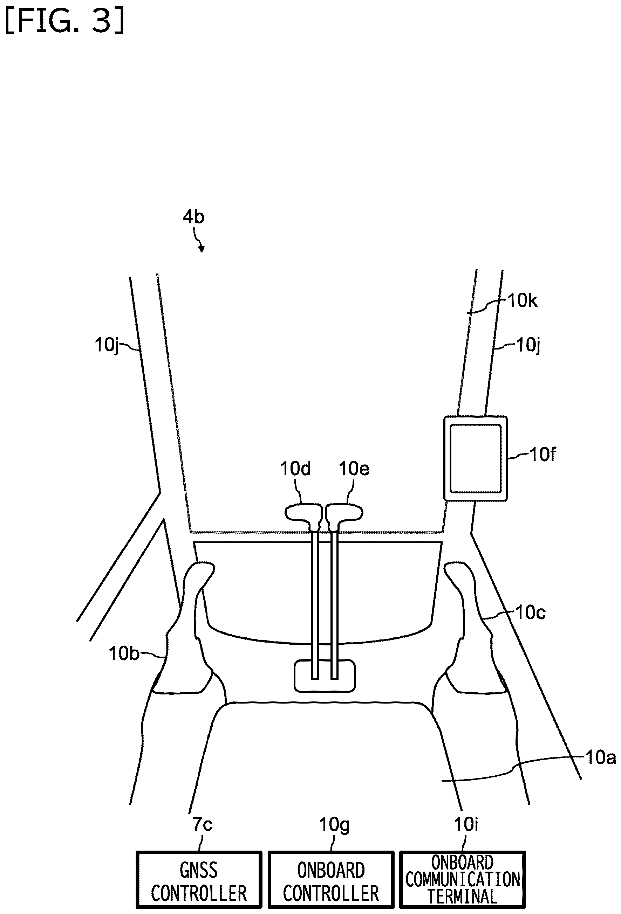

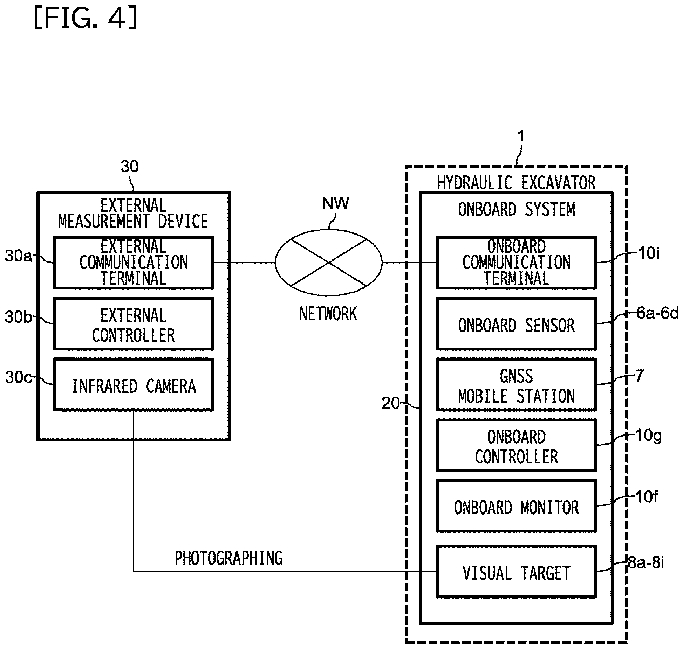

The swing structure 4 of the hydraulic excavator 1 is mounted with a GNSS mobile station 7 (FIG. 4) as a position measurement section for measuring the current position of the swing structure 4 in the global coordinate system. The GNSS mobile station 7 is provided with antennas (GNSS antennas) 7a and 7b installed above the swing structure 4, a wireless communication device, and a GNSS controller 7c (FIG. 3). The antenna 7a is a master antenna and is arranged on the left side of the swing structure 4. The antenna 7b is a slave antenna and is arranged on the right side of the swing structure 4. The GNSS mobile station 7 receives radio waves from positioning satellites by the two antennas 7a and 7b, and computes position coordinates and an inter-antenna vector Va (FIG. 2) of the antennas 7a and 7b by the GNSS controller 7c on the basis of the radio waves from the satellites received by the antennas 7a and 7b. In addition, the GNSS mobile station 7 receives position correction data from a GNSS fixed station (not illustrated) installed at the work site via a wireless communication device. The GNSS mobile station 7 uses the position correction data received from the GNSS fixed station to perform positioning by the RTK-GNSS system, so that the positions and the inter-antenna vector Va of the antennas 7a and 7b are acquired with high accuracy.

### -Visual target-

The hydraulic excavator 1 is provided with a plurality of visual targets 8a to 8i attached to the plurality of movable members described above. The visual targets 8a to 8i are elements for easily detecting the coordinates of specific points on the plurality of movable members, and are configured with a retroreflective material in the present embodiment. The specific points are points serving as targets of coordinate measurement by an external measurement device 30 (described later) installed around the hydraulic excavator 1. In order to compute the angles of the movable members on the basis of the measured coordinates of the specific points, two or more specific points are set for each movable member. The visual targets 8a to 8i can be of a detachable type in which they are mounted to the respective specific points of the movable members by, for example, magnets, but there is no problem if they are permanently attached to the movable members. For example, marks attached to the movable members by sealing or painting can be the visual targets 8a to 8i, or in a case where a portion which has a characteristic shape or pattern and whose image can be easily recognized is located at a desired position of the movable member, the portion can also be used as the visual target.

The visual targets 8a to 8e of the visual targets 8a to 8i are attached to the movable members of the front work device 5. In the case of the present embodiment, the boom 5b, the arm 5c, the bucket 5d, and the bucket links 5h and 5i are movable members for the front work device 5, and the specific point is set to each of the boom 5b, the arm 5c, the bucket 5d, and the bucket link 5h. The visual target 8a is provided at the base part of the boom 5b, specifically, at the end face of a pin coupling the boom 5b to the swing frame 4a on the opposite side (right side) to the cabin 4b. The visual target 8b is provided at the base part of the arm 5c, specifically, at each of both end faces of a pin coupling the arm 5c to the boom 5b. The visual target 8c is provided at the base part of the bucket 5d, specifically, at each of both end faces of a pin coupling the bucket 5d to the arm 5c. The visual target 8d is provided at the base part of the bucket link 5h, specifically, at each of both end faces of a pin coupling the bucket link 5h to the arm 5c. The visual target 8e is provided at the tip end part of the bucket link 5h, specifically, at each of both end faces of a pin coupling the bucket cylinder 5g to the bucket link 5h.

It should be noted that a case where the specific points of the front work device 5 are set to the end faces of the pins (pivoting shafts) is exemplified in the present embodiment, but the specific points can be set not only to the pins but also to side faces or the like of the movable members. However, in order to compute the posture of each movable member, two or more specific points are required for each movable member, but by setting the specific point to the pin coupling two movable members, the two movable members can share the specific point and the number of specific points can be suppressed.

The visual targets 8f to 8i of the visual targets 8a to 8i are attached to the movable members of the machine body 2. In the case of the present embodiment, the swing frame 4a that swings along with the swing of the swing structure 4 and the two antennas 7a and 7b are movable members for the machine body 2, and the specific point is set to each of the swing frame 4a and the antennas 7a and 7b. The visual target 8f is provided on each of the left and right sides of the front part of the swing frame 4a, specifically, the front part of the bottom surface (surface exposed downward) of the swing frame 4a and two visual targets 8f are provided in total (FIG. 1 and FIG. 2). The visual target 8g is provided on each of the left and right sides of the rear part of the swing frame 4a, specifically, the rear part of the bottom surface of the swing frame 4a and two visual targets 8g are provided in total (FIG. 1 and FIG. 2). A plurality of visual targets 8h are provided at the antenna 7a, specifically, the outer peripheral part of a mount part of the antenna 7a at equal intervals and is annularly arranged. A plurality of visual targets 8i are provided at the antenna 7b, specifically, the outer peripheral part of a mount part of the antenna 7b at equal intervals and is annularly arranged.

### -Inside of cabin-

FIG. 3 is a diagram for depicting the inside of the cabin 4b as viewed forward from the operator's seat. As depicted in FIG. 3, an operator's seat 10a, operation lever devices 10b to 10e, the onboard monitor 10f, the onboard controller 10g, the GNSS controller 7c, and an onboard communication terminal 10i are arranged inside the cabin 4b.

The operator's seat 10a is a seat on which the operator is seated. The operation lever devices 10b and 10c are provided on the left and right sides of the front part of the operator's seat 10a. The operation lever devices 10b and 10c are devices for operating the swing structure 4 and the front work device 5. Specifically, the operation lever device 10b on the left side is used for instruction of operations of the arm 5c and the swing structure 4, and the operation lever device 10c on the right side is used for instruction of operations of the boom 5b and the bucket 5d.

In addition, in front of the operator's seat 10a, the operation lever devices 10d and 10e are arranged side by side. The operation lever devices 10d and 10e are devices for operating left and right crawler belts 3c of the track structure 3. The operation lever device 10d on the left side is used for instruction of operation of the crawler belt 3c on the left side, and the operation lever device 10e on the right side is used for instruction of operation of the crawler belt 3c on the right side.

The onboard monitor 10f is a display device for displaying various data such as support information (operation support information) related to the operation of the hydraulic excavator 1. The cabin 4b is provided with left and right pillars 10j supporting the front side of the roof part, and a windshield 10k fitted into the left and right pillars 10j. In the present embodiment, a configuration in which the onboard monitor 10f is installed in the pillar 10j on the right side is exemplified, but the arrangement of the onboard monitor 10f can be appropriately adjusted.

The onboard controller 10g, the GNSS controller 7c, and the onboard communication terminal 10i are schematically illustrated in FIG. 3, but a configuration in which they are arranged behind the operator's seat 10a is exemplified in the present embodiment.

### -Operation support system-

FIG. 4 is a schematic diagram of an operation support system according to the embodiment of the present invention. The operation support system is a system in which the current position of a predetermined portion (for example, the tip end of the bucket 5d) of the front work device 5 is sequentially computed on the basis of the angles of the plurality of movable members of the machine body 2 and the front work device 5, and is displayed as operation support information on the onboard monitor 10f in real time. The operation support information and various data computed in the display process thereof can also be used as basic information for automatic control or semi-automatic control of the front work device 5 and the machine body 2, or what is called machine control.

The operation support system depicted in FIG. 3 includes an onboard system 20 and an external measurement device 30. The onboard system 20 is configured with equipment mounted on the hydraulic excavator 1. The external measurement device 30 is a system installed outside the machine, that is, outside the hydraulic excavator 1, and is connected to the onboard system 20 via a network NW. Hereinafter, the onboard system 20 and the external measurement device 30 will be sequentially described.

### -Onboard system-

The onboard system 20 includes, in the case of the present embodiment, the onboard communication terminal 10i, the onboard sensors 6a to 6d, the visual targets 8a to 8i, the GNSS mobile station 7, the onboard controller 10g, and the onboard monitor 10f.

The visual targets 8a to 8i are members made of a retroreflective material installed in the respective movable members of the machine body 2 and the front work device 5 of the hydraulic excavator 1 as described above. The visual targets 8a to 8i are the targets of coordinate measurement by the external measurement device 30. As described above, the visual targets 8a to 8e are provided in the movable members of the front work device 5, specifically, the boom 5b, the arm 5c, the bucket 5d, and the bucket link 5h. As described above, the visual targets 8f to 8i are provided in the movable members of the machine body 2, specifically, the swing frame 4a and the two antennas 7a and 7b.

The onboard communication terminal 10i is a communication device for connecting the onboard controller 10g to the external network NW of the hydraulic excavator 1. The onboard communication terminal 10i is connected to the external measurement device 30 via the network NW, and receives the three-dimensional coordinates of the visual targets 8a to 8i from the external measurement device 30.

The onboard sensors 6a to 6d are IMUs (inertial measurement unit), as described above, in the present embodiment, are installed in the plurality of movable members configuring the machine body 2 and the front work device 5, and output the ground angles of the corresponding movable members. Specific examples of the movable members where the onboard sensors 6a to 6d are installed are the swing frame 4a, the boom 5b, the arm 5c, and the bucket link 5h. The onboard sensor 6a is installed in the swing frame 4a, the onboard sensor 6b is installed in the boom 5b, the onboard sensor 6c is installed in the arm 5c, and the onboard sensor 6d is installed in the bucket link 5h.

The GNSS mobile station 7 is provided with the GNSS controller 7c (FIG. 3) as described above. The GNSS controller 7c is a computer that computes the position coordinates and the inter-antenna vector Va (FIG. 2) of the antennas 7a and 7b on the basis of the radio waves from the satellites received by the antennas 7a and 7b. The GNSS controller 7c uses the position correction data from the GNSS fixed station (not illustrated) to perform positioning by the RTK-GNSS system, and the positions and the inter-antenna vector Va of the antennas 7a and 7b are acquired with high accuracy. The GNSS controller 7c is connected to the onboard controller 10g via a wired or wireless onboard network, computes the global coordinates and the inter-antenna vector Va of the GNSS antennas 7a and 7b in real time, and outputs them to the onboard controller 10g. However, some or all of the functions of the GNSS controller 7c can be provided to the onboard controller 10g.

The onboard controller 10g is a computer that executes various computations and controls related to the state and operation of the hydraulic excavator 1, and has a function of allowing the onboard monitor 10f to display the operation support information containing information of the position of a predetermined portion of the front work device 5. In particular, the onboard controller 10g of the present embodiment has a function of computing the operation support information on the basis of the output of the external measurement device 30. The onboard controller 10g is connected to the onboard sensors 6a to 6d, the GNSS mobile station 7 (GNSS controller 7c), the onboard communication terminal 10i, and the onboard monitor 10f via a wired or wireless onboard network. The onboard controller 10g includes a computation device and a storage device, and the storage device stores, in addition to a control program, dimension data on each part of the hydraulic excavator 1, three-dimensional design data representing the shape of the target surface of the terrain profile to be created at the construction site, and the like.

The onboard monitor 10f functions as a user interface to present the operation support information to the operator using display and sound via a display and a speaker, and to accept a setting operation of the operator via a touch panel.

### -External measurement device-

The external measurement device 30 is a measurement device that is fixedly installed around the hydraulic excavator 1 and measures, in real time, the three-dimensional coordinates of the specific points (visual targets 8a to 8i in the example) of the plurality of movable members configuring the machine body 2 and the front work device 5. As depicted in FIG. 4, the external measurement device 30 is provided with a plurality of infrared cameras 30c, an external controller 30b, and an external communication terminal 30a.

The infrared cameras 30c are photographing devices for photographing the visual targets 8a to 8i of the hydraulic excavator 1, are mounted with infrared LEDs, and irradiate a photographing target with infrared rays. The plurality of infrared cameras 30c is arranged so as to surround the hydraulic excavator 1, and is fixedly installed on a stationary object such as a ground or a structure around the hydraulic excavator 1 in a state where the hydraulic excavator is within the photographing range (FIG. 2). The positional relationship of the respective infrared cameras 30c during the photographing of the visual targets 8a to 8i is unchanged. When the hydraulic excavator 1 is photographed by the infrared cameras 30c, infrared rays are reflected by the visual targets 8a to 8i, and the visual targets 8a to 8i are captured in the photographed images of the infrared cameras 30c owing to the reflected light from the visual targets 8a to 8i.

The external controller 30b is a computer that computes individual three-dimensional coordinates of the visual targets 8a to 8i on the basis of the photographed images of the visual targets 8a to 8i photographed from different azimuths by the plurality of infrared cameras 30c. The external controller 30b is connected to the infrared cameras 30c and the external communication terminal 30a via a network. The three-dimensional coordinates of the visual targets 8a to 8i sequentially computed by the external controller 30b are transmitted from the external measurement device 30 via the external communication terminal 30a and are received by the onboard system 20 via the network NW.

### -Display screen of onboard monitor-

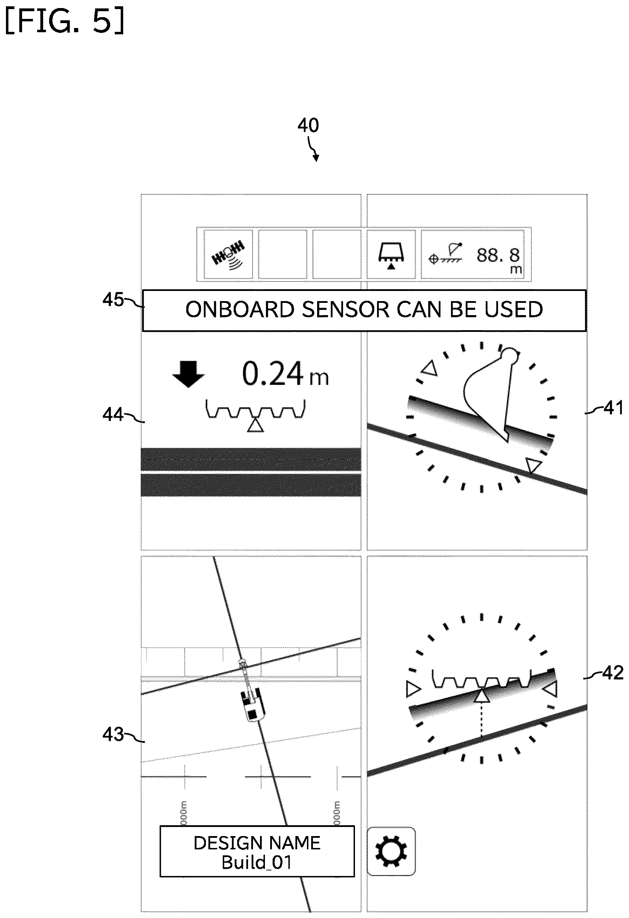

FIG. 5 is a diagram for depicting an example of a display screen displayed on the onboard monitor 10f. On a display screen 40 depicted in FIG. 5, images 41 and 42 representing the position and angle of the bucket 5d, an image 43 representing the position and orientation of the hydraulic excavator 1, an image 44 representing a distance between the tip end position of the bucket 5d and the target surface of the terrain profile to be created, and the like are displayed as the operation support information. In addition, a message field 45 is displayed on the display screen 40. When the system state is shifted to the "calibration completion," the message field 45 displays, for a certain period of time, the fact that the system has been shifted to a state in which the posture of the hydraulic excavator 1 is computed by using the onboard sensors 6a to 6d and the GNSS mobile station 7.

### -Flowchart of onboard system-

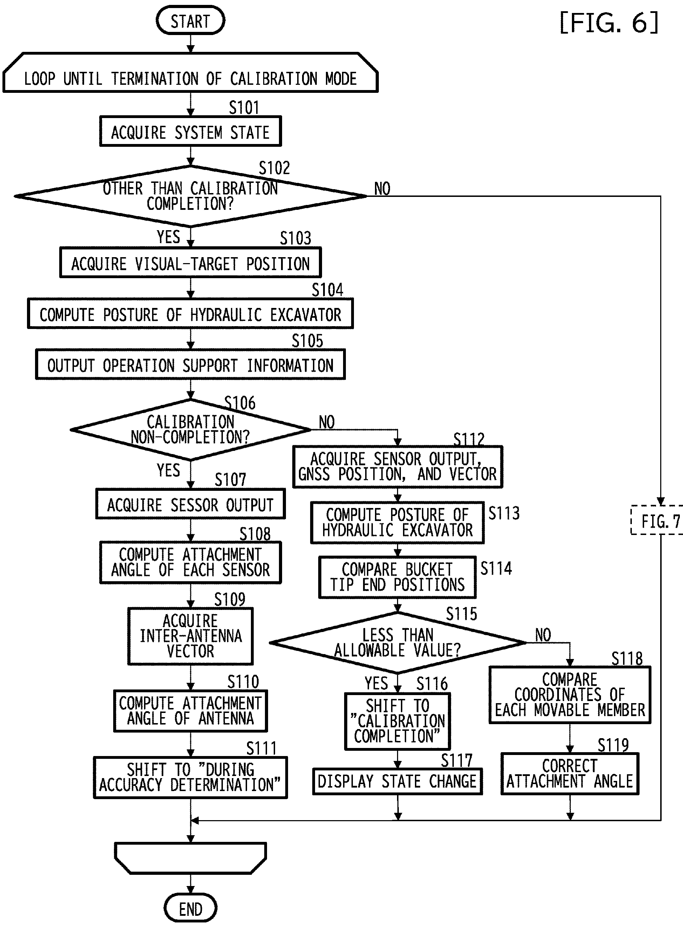

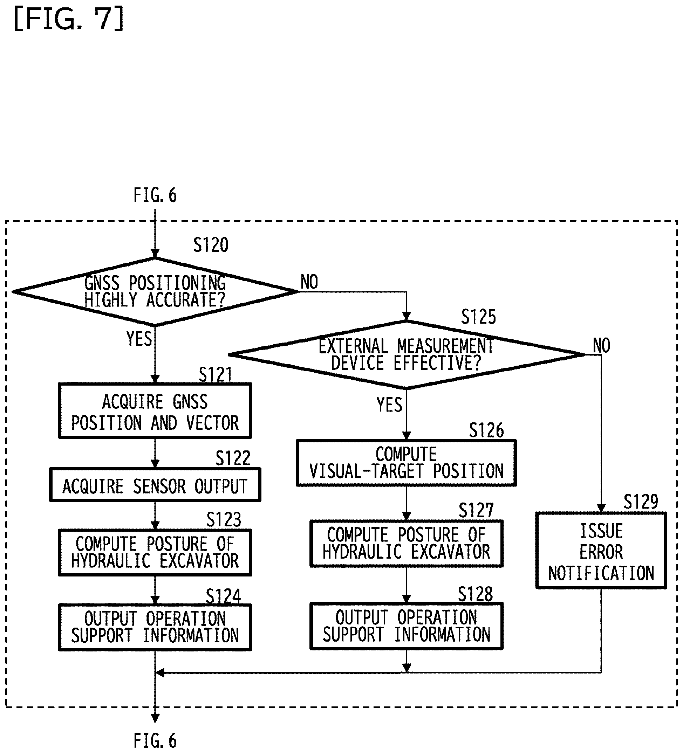

FIG. 6 and FIG. 7 are flowcharts for depicting a procedure of operation support by the operation support system according to the present embodiment. The loop procedure of Steps S101 to S129 depicted in FIG. 6 and FIG. 7 is repeatedly executed by the onboard controller 10g during a calibration operation of the attachment angles of the onboard sensors 6a to 6d and the antennas 7a and 7b. The start and end of the calibration of the attachment angles of the onboard sensors 6a to 6d and the like are instructed by the operator or the like using, for example, a mode switch (for example, a menu to be called onto the display screen of the onboard monitor 10f) for performing the calibration operation for the onboard sensors 6a to 6d. In the present embodiment, the operation of the hydraulic excavator 1 is permitted even during the execution of the flow of FIG. 6 and FIG. 7, that is, during the calibration of the attachment angles of the onboard sensors 6a to 6d and the like. That is, while calibrating the attachment angles of the onboard sensors 6a to 6d and the like, work such as creation of the terrain profile can be performed by using the hydraulic excavator 1.

The flow of FIG. 7 and FIG. 7 is roughly classified into (a) process for determining the system state, (b) process when the calibration is not completed, (c) process during accuracy determination, and (d) process after the calibration is completed. When the flow of FIG. 6 and FIG. 7 is repeatedly executed during the calibration operation of the attachment angles of the onboard sensors 6a to 6d and the like, the procedure typically proceeds in the order of (a) process for determining the system state, (b) process when the calibration is not completed, (c) process during accuracy determination, and (d) process after the calibration is completed.

The term "(a) process for determining the system state" is a process for determining whether data (hereinafter, a system state) representing the current state of the onboard system 20 is any one of "calibration non-completion," "during accuracy determination," and "calibration completion." Steps S101 to S102 (strictly, further including Step S106) in the flow of FIG. 6 correspond to "(a) process for determining the system state."

The "calibration non-completion" means a state in which a sensor attachment angle θ (FIG. 1) of each of the onboard sensors 6a to 6d with respect to the movable members and an antenna attachment angle α (FIG. 2) have not been computed yet. In the present embodiment, the respective sensor attachment angles θ and antenna attachment angles α are collectively referred to as "parameters." Where even any one of these parameters has not been computed, the system state corresponds to the calibration non-completion. The term "(b) process when the calibration is not completed" is a process executed while the system state is the "calibration non-completion," and corresponds to Steps S103 to S111 (strictly, excluding Step S106) in the flow of FIG. 6.

The "during accuracy determination" means during the determination of whether or not a certain degree of accuracy has been secured in the posture of the hydraulic excavator 1 computed on the basis of the outputs of the onboard sensors 6a to 6d and the GNSS mobile station 7 after the computation of all the parameters. In the present embodiment, the accuracy is determined for the posture of the hydraulic excavator 1 on the basis of whether an error of a computed value based on the outputs of the onboard sensors 6a to 6d and the GNSS mobile station 7 with respect to a computed value based on the output of the external measurement device 30 falls within an allowable value. The term "(c) process during accuracy determination" is a process executed while the system state is the "during accuracy determination," and corresponds to Steps S103 to S106 and S112 to S119 (strictly, excluding Step S106) in the flow of FIG. 6.

The "calibration completion" means a state in which it has been confirmed that a certain degree of accuracy has been secured in the posture of the hydraulic excavator 1 computed on the basis of the outputs of the onboard sensors 6a to 6d and the GNSS mobile station 7. The term "(d) process after the calibration is completed" is a process executed while the system state is the "calibration completion" and corresponds to the flow of FIG. 7.

Hereinafter, the procedure will be described in the order of (a) process for determining the system state, (b) process when the calibration is not completed, (c) process during accuracy determination, and (d) process after the calibration is completed.

### (a) process for determining the system state

### Step S101

When the flow of FIG. 6 and FIG. 7 is started, the onboard controller 10g first reads and acquires the system state of the onboard system 20 from its own storage device. In the storage device of the onboard controller 10g, data indicating "calibration non-completion," "during accuracy determination," or "calibration completion" is selectively stored. In Step S101, the onboard controller 10g reads the current system state from the storage device by a computation device. If the current system state is data indicating the "calibration non-completion," the "calibration non-completion" is read as the system state. If the current system state is data indicating the "during accuracy determination," the "during accuracy determination" is read as the system state, and if the current system state is data indicating the "calibration completion," the "calibration completion" is read.

### Step S102

When the procedure moves from Step S101 to Step S102, the onboard controller 10g determines whether or not the current system state read in Step S101 is other than the "calibration completion," that is, the "calibration non-completion" or the "during accuracy determination." The onboard controller 10g moves the procedure to Step S103 when the current system state is the "calibration non-completion" or the "during accuracy determination," and moves the procedure to Step S120 (FIG. 7) when the current system state is the "calibration completion."

### (b) process when the calibration is not completed

### Step S103

When the procedure moves from Step S102 to Step S103, the onboard controller 10g receives and acquires from the external measurement device 30 information of the current three-dimensional coordinates of the visual targets 8a to 8i measured by the external measurement device 30. In the external measurement device 30, the three-dimensional coordinates of the centers (specific points on the movable members) of the visual targets 8a to 8i are measured in real time by computation in the external controller 30b on the basis of the photographed images of the plurality of infrared cameras 30c. In Step S102, the current three-dimensional coordinates of the visual targets 8a to 8i thus computed are input to the onboard controller 10g.

It should be noted that some or all of the functions of the external controller 30b can also be transferred to the onboard controller 10g. For example, it is also conceivable to have a configuration in which the photographed image of each infrared camera 30c is transmitted to the onboard controller 10g via the network NW and the onboard communication terminal 10i, and the three-dimensional coordinates of the visual targets 8a to 8i are sequentially computed on the basis of each photographed image in the onboard controller 10g.

### Step S104

When the procedure moves from Step S103 to Step S104, the onboard controller 10g computes the current posture of the hydraulic excavator 1 on the basis of the three-dimensional coordinates of the visual targets 8a to 8i. The current posture of the hydraulic excavator 1 is data including the current position of a predetermined portion of the front work device 5, that is, the tip end of the bucket 5d in the present embodiment, in addition to the current angle of each movable member of the machine body 2 and the front work device 5. Hereinafter, the current angle of each movable member computed on the basis of the output of the external measurement device 30 is described as a first angle, and the current position of a predetermined portion is described as a first position in some cases.

For example, the angle of the boom 5b is the ground angle (angle to the horizontal plane) of the boom 5b, and is computed from the three-dimensional coordinates of the center points of the visual targets 8a and 8b. The angle of the arm 5c is the ground angle of the arm 5c and is computed from the three-dimensional coordinates of the center points of the visual targets 8b and 8c. The angle of the bucket 5d is the ground angle of the bucket 5d and is computed from the three-dimensional coordinates of the center points of the visual targets 8c to 8e. The tip end position of the bucket 5d is computed from dimension data on each member of the hydraulic excavator 1 stored in advance in the storage device of the onboard controller 10g, the center positions of the visual targets 8a to 8e, and the angles of the boom 5b, the arm 5c, and the bucket 5d.

### Step S105

When the procedure moves to Step S105, the onboard controller 10g sequentially outputs to the onboard monitor 10f the operation support information (display screen 40 in FIG. 5) containing the current position of the tip end of the bucket 5d computed in Step S104, and causes the onboard monitor 10f to display it in real time. That is, MG using the external measurement device 30 is carried out. The operation support information includes the position and angle of the bucket 5d, a distance from the target surface, and the like (screens 41 to 44) that are computed on the basis of the current position of the tip end of the bucket 5d and three-dimensional design data on the target surface stored in the onboard controller 10g. The operator operates the hydraulic excavator 1 while appropriately confirming the operation support information displayed on the display screen 40 to perform work such as creation of the terrain profile. Hereinafter, the operation support information based on the output of the external measurement device 30 is described as first operation support information in some cases.

### Step S106

When the procedure moves from Step S105 to Step S106, the calibration of the parameters is executed while the operation support is executed by using the external measurement device 30. For this purpose, the onboard controller 10g first determines whether or not the current system state read in Step S101 is the "calibration non-completion." The onboard controller 10g moves the procedure to Step S107 when the current system state is the "calibration non-completion," and moves the procedure to Step S112 when the current system state is the "during accuracy determination."

### Step S107

When the current system state is the "calibration non-completion" and the procedure moves to Step S107, the onboard controller 10g acquires the current ground angles output by the onboard sensors 6a to 6d. It should be noted that the current angle of each movable member output by the onboard sensors 6a to 6d is hereinafter described as a second angle in some cases.

### Step S108

When the procedure moves from Step S107 to Step S108, the onboard controller 10g computes the attachment angles of the onboard sensors 6a to 6d with respect to the movable members.

The attachment angles of the onboard sensors 6b to 6d attached to the front work device 5 are computed on the basis of each ground angle (second angle) output by the onboard sensors 6a to 6d acquired in Step S107 and the ground angle (first angle) of the corresponding movable member computed in Step S104. In the present embodiment, the difference between each ground angle (second angle) output by the onboard sensors 6a to 6d and the ground angle (first angle) computed in Step S104 is computed as the attachment angles of the onboard sensors 6a to 6d. The attachment angles serve as calibration values used for calibration for the onboard sensors 6b to 6d. For example, the difference between the ground angle of the boom 5b obtained from the center coordinates of the visual targets 8a and 8b and the ground angle output from the onboard sensor 6b is computed as the attachment angle θ of the onboard sensor 6b (FIG. 1). Similarly, the difference between the ground angle of the arm 5c obtained from the center coordinates of the visual targets 8b and 8c and the ground angle output by the onboard sensor 6c is computed as the attachment angle θ of the onboard sensor 6c. The difference between the ground angle of the bucket link 5h obtained from the center coordinates of the visual targets 8d and 8e and the ground angle output by the onboard sensor 6d is computed as the attachment angle θ of the onboard sensor 6d.

In the computation of the attachment angle of the onboard sensor 6a attached to the swing frame 4a, the center coordinates of both end faces of a pin (for example, a pin with the visual target 8b attached) of a joint of the front work device 5 are first computed from each of the center coordinates of the visual targets 8b to 8e acquired in Step S103. A normal vector N (FIG. 2) of an operating plane S (FIG. 2) that is a plane along the operating trajectory of the front work device 5 is computed from the center coordinates of both end faces of the pin. Next, on the basis of the three-dimensional coordinates of the visual targets 8f and 8g projected onto the front operating plane S, the ground angle of the swing frame 4a in the plane of the operating plane S is computed, and on the basis of this ground angle and the ground angle output by the onboard sensor 6a, the attachment angle of the onboard sensor 6a along the operating plane S is computed. Similarly, on the basis of the three-dimensional coordinates of the visual targets 8f and 8g projected onto an orthogonal plane to the operating plane S, the ground angle of the swing frame 4a in the orthogonal plane is computed, and on the basis of this ground angle and the ground angle output by the onboard sensor 6a, the attachment angle of the onboard sensor 6a along the orthogonal plane is computed.

### Step S109

When the procedure moves from Step S108 to Step S109, the onboard controller 10g acquires the inter-antenna vector Va from the GNSS controller 7c when the onboard system 20 includes the GNSS mobile station 7. It should be noted that, when the hydraulic excavator 1 is not provided with the GNSS mobile station 7, the onboard controller 10g skips the procedure of Step S109.

### Step S110

When the procedure moves from Step S109 to Step S110, the onboard controller 10g computes the antenna attachment angle α (FIG. 2) on the basis of the three-dimensional coordinates of the visual targets 8a to 8i measured by the external measurement device 30. For example, a front direction vector Vm (FIG. 2) extending along the operating plane S is first computed from each of the center coordinates of the visual targets 8a to 8g acquired in Step S103. Then, the angle formed by the inter-antenna vector Va projected onto a swing operating plane (orthogonal plane to the swing axis) of the swing structure 4 and the front direction vector Vm is computed as the antenna attachment angle α (FIG. 2). The swing operating plane of the swing structure 4 is computed from the three-dimensional coordinates of the visual targets 8f and 8g installed in the swing frame 4a. It should be noted that, when the hydraulic excavator 1 is not provided with the GNSS mobile station 7, the onboard controller 10g skips the procedure of the Step S110.

### Step S111

When the procedure moves to Step S111 after the attachment angles of the onboard sensors 6a to 6d and the antennas 7a and 7b are computed, the onboard controller 10g shifts the system state to the "during accuracy determination" and records it in the storage device. The onboard controller 10g terminates the flow of FIG. 6 and FIG. 7 when an instruction to terminate the calibration has been given by the operator or the like, and returns the procedure to Step S101 when an instruction to terminate the calibration has not been given.

It should be noted that in the present embodiment, all the parameters are computed by the procedure in one cycle of the flow of FIG. 6 and FIG. 7, but the parameters may be computed by statistical calculation of data acquired during a predetermined period. In this case, the parameters are computed by using data during the period when the swing operation is not performed. In addition, it is also possible to employ a computation method in which a plurality of parameters are computed with different postures for each movable member, and the average value thereof is used as the final parameter. In addition, in the execution of MG, an example of computing a bucket tip end position and the like in the global coordinate system will be described, but the computation may be performed in a coordinate system used for, for example, measurement of the external measurement device 30.

### (c) process during accuracy determination

### Step S112

When the system state shifts to the "during accuracy determination" in Step S111, the system state is determined as the "during accuracy determination" in the determination of Steps S102 and S106. In this case, the onboard controller 10g moves the procedure to Step S112 while MG by the external measurement device 30 in Steps S103 to S105 is executed. When the procedure moves to Step S112, the onboard controller 10g acquires the ground angle (second angle) of each movable member output by the onboard sensors 6a to 6d, and the positions and the inter-antenna vector Va of the antennas 7a and 7b output by the GNSS mobile station 7.

### Step S113

When the procedure moves to Step S113, the onboard controller 10g computes the current posture of the hydraulic excavator 1 on the basis of the data acquired in Step S112, by using the attachment angles of the onboard sensors 6a to 6d and the antennas 7a and 7b obtained in Steps S108 and S110. That is, the current ground angle of each movable member and the three-dimensional coordinates (second position) of the tip end of the bucket are computed on the basis of the outputs of the onboard sensors 6a to 6d and the GNSS mobile station 7 by using the attachment angles of the onboard sensors 6a to 6d and the antennas 7a and 7b obtained by using the external measurement device 30.

### Step S114

When the procedure moves from Step S113 to Step S114, the onboard controller 10g compares the three-dimensional coordinates of the tip end of the bucket 5d computed in Step S113 and Step S104. That is, the three-dimensional coordinates (second position) of the tip end of the bucket computed on the basis of the outputs of the onboard sensors 6a to 6d and the GNSS mobile station 7 are compared with the three-dimensional coordinates (first position) of the tip end of the bucket computed on the basis of the three-dimensional coordinates of the visual targets 8a to 8i measured by the external measurement device 30.

### Step S115

As a result of the comparison in Step S114, the onboard controller 10g determines whether a difference of the bucket tip end position (second position) computed in Step S104 from the bucket tip end position (first position) computed in Step S113 is less than a preset allowable value. At this time, in the present embodiment, for example, a distance difference in the horizontal direction (XY plane direction) and a distance difference in the vertical direction (Z axis direction) are computed for the bucket tip end positions computed in Steps S104 and S113. In Step S115, it is determined whether or not each of the distance difference in the horizontal direction and the distance difference in the vertical direction of the tip end position of the bucket 5d thus computed is less than the allowable value.

Where each of the distance differences in the horizontal direction and the vertical direction of the bucket tip end position is less than the allowable value, the onboard controller 10g moves the procedure to Step S116. Where at least one of the distance differences in the horizontal direction and the vertical direction of the bucket tip end position is equal to or larger than the allowable value, the onboard controller 10g moves the procedure to Step S118.

### Step S116

When each of the distance differences in the horizontal direction and the vertical direction of the bucket tip end position is less than the allowable value and the procedure moves to Step S116, the onboard controller 10g shifts the system state to the "calibration completion" and records it in the storage device. Where the distance difference is less than the allowable value, the computation is automatically switched to the computation (MG by the onboard sensors 6a to 6d) of the operation support information based on the outputs of the onboard sensors 6a to 6d when the system state shifts to the "calibration completion." Hereinafter, the operation support information based on the outputs of the onboard sensors 6a to 6d are described as (second operation support information) in some cases.

### Step S117

Where the procedure moves to Step S117, that is, where it is determined that the distance difference is less than the allowable value, the onboard controller 10g outputs to the onboard monitor 10f the fact that the operation support information is in the state of being computed on the basis of the outputs of the onboard sensors 6a to 6d, and causes it to be displayed for a predetermined period of time. Accordingly, the operator can recognize that MG using the external measurement device 30 has been switched to MG using the onboard sensors 6a to 6d. On the display screen 40 depicted in FIG. 5, an example of displaying the message "onboard sensor can be used" in the message field 45 is depicted. After executing Step S117, the onboard controller 10g terminates the flow of FIG. 6 and FIG. 7 when an instruction to terminate the calibration has been given by the operator or the like, and returns the procedure to Step S101 when an instruction to terminate the calibration has not been given.

### Step S118

When at least one of the distance differences in the horizontal direction and the vertical direction of the bucket tip end position is equal to or larger than the allowable value and the procedure moves from Step S115 to Step S118, the onboard controller 10g compares the coordinates of the respective movable members with each other. In Step S118, for example, a vector from the proximal end part to the tip end part of each movable member is computed and is compared with the output of the corresponding onboard sensor. For example, in the case of the boom 5b, a vector from the center coordinates of the visual target 8a to the center coordinates of the visual target 8b is computed, the angle of this vector is compared with the ground angle output by the onboard sensor 6b, and a difference between them is computed.

### Step S119

In Step S119 that follows, the onboard controller 10g compares again the angles of the movable members based on the three-dimensional coordinates of the visual targets 8a to 8i measured by the external measurement device 30 with the angles of the movable members output by the onboard sensors 6a to 6d, and corrects the attachment angles of the onboard sensors 6a to 6d. For example, the onboard controller 10g specifies the onboard sensor in which the difference between the angle of the vector computed in Step S118 and the ground angle to be output is equal to or larger a setting value, as an onboard sensor in which the computation of the attachment angle is incorrect. Then, the onboard controller 10g corrects the computation value of the attachment angle on the basis of the difference computed in Step S118 for the onboard sensor in which the computation of the attachment angle is incorrect.

After executing Step S119, the onboard controller 10g terminates the flow of FIG. 6 and FIG. 7 when an instruction to terminate the calibration has been given by the operator or the like, and returns the procedure to Step S101 when an instruction to terminate the calibration has not been given. Where at least one of the differences in the horizontal direction and the vertical direction computed by the determination in Step S115 is equal to or larger than the allowable value, the system state is maintained at the "during accuracy determination," and the state in which the operation support information is computed (MG is executed) on the basis of the output of the external measurement device 30 continues. As the procedures of Steps S101 to S106, S112 to S115, S118, and S119 are repeated, the computation accuracy of the attachment angles of the onboard sensors 6a to 6d increases, and the system state shifts to the "calibration completion."

### (d) process after the calibration is completed

### Step S120

When the system state shifts to the "calibration completion," the onboard controller 10g moves the procedure from Step S102 to Step S120 (FIG. 7). When the procedure moves to Step S120, the onboard controller 10g determines whether the positions and the inter-antenna vector Va of the antennas 7a and 7b output by the GNSS mobile station 7 are highly accurate on the basis of the positioning accuracy output by the GNSS mobile station 7. The onboard controller 10g moves the procedure from Step S120 to Step S121 when the output of the GNSS mobile station 7 is highly accurate, and moves the procedure from Step S120 to Step S125 when the output of the GNSS mobile station 7 is not highly accurate.

Here, in the present embodiment, the "highly accurate" determined in Step S120 means that, for example, a fix solution has been obtained by the RTK-GNSS system. In the RTK-GNSS system, interference positioning calculation is executed in real time and the result is output. This interference positioning calculation is computed by multiplying the wave number by the wavelength, and when the radio waves from the satellites reach the antennas 7a and 7b, a decimal part of the waves can be recognized, but an integer part (integer bias) cannot be recognized. In the RTK-GNSS system, a positioning solution obtained as an integer value of a bias by repeating estimation computation is the fix solution. Where the fix solution has been obtained, the GNSS mobile station 7 notifies the onboard controller 10g of the fact that the fix solution has been obtained. The onboard controller 10g determines whether the output of the GNSS mobile station 7 is highly accurate on the basis of the notification from the GNSS mobile station 7. The accuracy of the fix solution is approximately 5 to 20mm.

### Steps S121 to S124

Where a fix solution can be obtained by the GNSS mobile station 7, the onboard controller 10g computes the posture of the hydraulic excavator 1 on the basis of the positions and the inter-antenna vector Va of the antennas 7a and 7b output by the GNSS mobile station 7 to generate the operation support information, and causes the onboard monitor 10f to display it. After executing Step S124, the onboard controller 10g terminates the flow of FIG. 6 and FIG. 7 (FIG. 6) when an instruction to terminate the calibration has been given by the operator or the like, and returns the procedure to Step S101 (FIG. 6) when an instruction to terminate the calibration has not been given.

### Steps S125 to S129

Where a fix solution cannot be obtained by the GNSS mobile station 7, the onboard controller 10g determines whether the connection with the external measurement device 30 is maintained (Step S125). Where the connection with the external measurement device 30 is maintained, the posture of the hydraulic excavator 1 is computed on the basis of the three-dimensional coordinates of the visual targets 8a to 8i output by the external measurement device 30, and the operation support information is generated to be displayed on the onboard monitor 10f (Steps S126 to S128). The procedures of Steps S126 to S128 are similar to Steps S103 to S105. In contrast, where the connection with the external measurement device 30 is disconnected, such as when the system state shifts to the "calibration completion" and the power supply of the external measurement device 30 is turned off, the onboard controller 10g displays and outputs a GNSS positioning error on the onboard monitor 10f (Step S129). After executing Step S128 or Step S129, the onboard controller 10g terminates the flow of FIG. 6 and FIG. 7 (FIG. 6) when an instruction to terminate the calibration has been given by the operator or the like, and returns the procedure to Step S101 (FIG. 6) when an instruction to terminate the calibration has not been given.

### -Effect-

(1) According to the present embodiment, the current posture of the hydraulic excavator 1 is sequentially computed by the onboard controller 10g on the basis of the three-dimensional coordinates of the specific points (the visual targets 8a to 8i in the present embodiment) on the hydraulic excavator 1 sequentially measured by the external measurement device 30 arranged around the hydraulic excavator 1. The operation support information is generated on the basis of the posture of the hydraulic excavator 1 thus computed, and is displayed and output to the onboard monitor 10f, so that MG can be performed even in a state where the attachment angles of the onboard sensors 6a to 6d are not calibrated. MG by the external measurement device 30 is possible not only in a case where the calibration for the onboard sensors 6a to 6d has not been completed although the hydraulic excavator 1 is provided with the onboard sensors 6a to 6d, but also in a case where the hydraulic excavator 1 is not originally mounted with the onboard sensors 6a to 6d. Therefore, according to the present embodiment, even if the hydraulic excavator 1 is not provided with the onboard sensors 6a to 6d with the attachment angles calibrated, it is possible to provide the operation support of the hydraulic excavator 1 for the operator.
(2) In addition, where the hydraulic excavator 1 is provided with the onboard sensors 6a to 6d, the attachment angles of the onboard sensors 6a to 6d can be computed on the basis of the angle of each movable member obtained from the three-dimensional coordinates of the specific points, even in a state where the calibration has not been completed and MG cannot be accurately performed by using the onboard sensors 6a to 6d. Therefore, while work is being performed by the hydraulic excavator 1 using MG by the external measurement device 30 as described above, the attachment angles of the onboard sensors 6a to 6d can be computed to execute the calibration for the onboard sensors 6a to 6d. Thus, for example, where an MG system including the onboard sensors 6a to 6d is retrofitted to the hydraulic excavator 1 at the work site, calibration for the onboard sensors 6a to 6d can be performed while MG by the external measurement device 30 is executed. The same applies to the case where the hydraulic excavator 1 is provided with the onboard sensors 6a to 6d but the exact attachment angles are unknown. In this way, work can be performed by the hydraulic excavator 1 during the calibration for the onboard sensors 6a to 6d, and the reduction in productivity at the site due to the calibration for the onboard sensors 6a to 6d can be suppressed.
(3) During the execution of MG by the external measurement device 30, if it is confirmed that the difference between the bucket tip end position based on the outputs of the onboard sensors 6a to 6d and the bucket tip end position based on the output of the external measurement device 30 is less than the allowable value, MG is automatically switched to MG by the onboard sensors 6a to 6d. That is, the display related to MC is automatically switched from the first operation support information based on the output of the external measurement device 30 to the second operation support information based on the outputs of the onboard sensors 6a to 6d. The switching from MG using the external measurement device 30 to MG using the onboard sensors 6a to 6d can be automatically executed without stopping the work performed by the hydraulic excavator 1.
(4) Where a predetermined degree of accuracy of the attachment angles of the onboard sensors 6a to 6d computed during the execution of MG by the external measurement device 30 is not secured, the attachment angles of the onboard sensors 6a to 6d are corrected for each movable member on the basis of the comparison between the value obtained by the external measurement device 30 and the values obtained by the onboard sensors 6a to 6d. Accordingly, a state in which the calibration of the attachment angles of the onboard sensors 6a to 6d is not completed indefinitely is avoided, and the calibration of the attachment angles of the onboard sensors 6a to 6d is automatically accomplished.
(5) In addition, where the calibration of the attachment angles of the onboard sensors 6a to 6d has been completed, the fact that MG has been switched to MG using the onboard sensors 6a to 6d is output to the onboard monitor 10f, and the operator can be informed that MG using the onboard sensors 6a to 6d has become effective.
(6) In addition, in the present embodiment, the specific points are set to the antennas 7a and 7b mounted on the machine body 2, and the attachment angles of the antennas 7a and 7b are computed by the onboard controller 10g on the basis of the three-dimensional coordinates of the specific points measured by the external measurement device 30. Thus, where the hydraulic excavator 1 uses the position and azimuth of the vehicle body using the GNSS for MG, the position and azimuth of the vehicle body can be computed using the external measurement device 30 and MG can be executed even in a state where the exact attachment angles of the antennas are unknown. In addition, during the execution of MG using the external measurement device 30, the attachment angles of the antennas 7a and 7b can be computed, and further, calibration can be performed.
(7) After calibrating the attachment positions of the antennas 7a and 7b, the state is shifted to a state in which MG is executed on the basis of the outputs of the onboard sensors 6a to 6d and the GNSS mobile station 7. At this time, where a fix solution cannot be obtained by the GNSS mobile station 7, MG can be executed on the basis of the output of the external measurement device 30 until a fix solution can be obtained.
(8) When measuring the specific points of the movable members by the external measurement device 30, the visual targets 8a to 8i are attached to the movable members as the specific points, so that the specific points can be identified with high accuracy on the photographed images of the infrared cameras 30c. Any kind of visual targets 8a to 8i can be used as long as they can be clearly identified on the photographed images, and for example, a retroreflective material is a preferred example of the visual targets 8a to 8i. In addition, although two or more specific points are required for each movable member in order to compute the posture of each movable member, by attaching the visual target 8a or the like to the pin coupling two movable members, the two movable members can share one visual target as the specific point, and thus the number of visual targets can be suppressed.

### Description of Reference Characters

1: hydraulic excavator (work machine)
2: machine body
4b: cabin (operation room)
4a: swing frame (movable member)
5: front work device
5b: boom (movable member)
5c: arm (movable member)
5d: bucket (movable member)
5h, 5i: bucket link (movable member)
6a to 6d: onboard sensor (angle sensor)
7: GNSS mobile station
7a, 7b: antenna (movable member)
8a to 8i: visual target (specific point)
10f: onboard monitor (monitor)
10g: onboard controller (controller)
30: external measurement device
30c: infrared camera
40: display screen (operation support information)
α: antenna attachment angle
θ: onboard sensor attachment angle

## Claims

1. A work machine comprising:
a machine body that has an operation room;
a front work device that is attached to the machine body;
a monitor that is provided in the operation room; and
a controller that causes the monitor to display operation support information including information on a position of a predetermined portion of the front work device, wherein
the controller
receives, from an external measurement device installed around the machine body, information on coordinates of two or more specific points for each movable member configuring the front work device measured by the external measurement device,
is configured to compute a first position as the position of the predetermined portion on a basis of the coordinates of the specific points, the coordinates being received from the external measurement device, and
causes the monitor to display first operation support information including information on the first position, as the operation support information.

2. The work machine according to claim 1, wherein
an angle sensor that is installed in the movable member to sense an angle of the movable member is provided, and
the controller is configured to
compute a first angle that is an angle of the movable member on the basis of the coordinates of the specific points, the coordinates being received from the external measurement device, and
compute a calibration value for the angle sensor on a basis of the first angle and a second angle that is the angle of the movable member output by the angle sensor.

3. The work machine according to claim 2, wherein
the calibration value is an attachment angle of the angle sensor with respect to the movable member, and
the controller
is configured to compute a second position as the position of the predetermined portion on a basis of the output and the attachment angle of the angle sensor,
is configured to determine whether a difference of the second position from the first position is less than a preset allowable value,
causes the monitor to display the first operation support information as the operation support information when the difference is equal to or larger than the allowable value, and
causes the monitor to display second operation support information including information on the second position as the operation support information when the difference is less than the allowable value.

4. The work machine according to claim 3, wherein
the controller is configured to compare the first angle with the second angle again and correct the attachment angle of the angle sensor, when the difference is equal to or larger than the allowable value.

5. The work machine according to claim 3, wherein
the controller causes the monitor to display a fact that the operation support information is in a state of being computed on a basis of the output of the angle sensor, when the difference is less than the allowable value.

6. The work machine according to claim 1, wherein
a GNSS mobile station having two antennas installed in the machine body is provided, and
the controller is configured to
compute attachment angles of the two antennas with respect to the machine body on a bases of three-dimensional coordinates of specific points on the machine body and the two antennas, the three-dimensional coordinates being received from the external measurement device.

7. The work machine according to claim 6, wherein
the controller
outputs the operation support information on a basis of the output of the external measurement device when a fix solution cannot be obtained by the GNSS mobile station, and
outputs the operation support information on a basis of an output of the GNSS mobile station when a fix solution can be obtained by the GNSS mobile station.

8. The work machine according to claim 1, wherein
visual targets are provided as the specific points.

9. An operation support system for a work machine, the operation support system generating operation support information for an operator, the operation support system comprising:
a monitor that is mounted in an operation room of the work machine;
a controller that is mounted in the work machine; and
an external measurement device that measures coordinates of two or more specific points for each movable member configuring a front work device attached to the work machine, wherein
the external measurement device transmits the measured coordinates of the specific points to the controller, and
the controller is configured to compute a position of a predetermined portion of the front work device on a basis of the coordinates of the specific points, the coordinates being received from the external measurement device, and causes the monitor to display the operation support information including information on the position of the predetermined portion.
